# EUROPÄISCHE PATENTANMELDUNG

(11) **EP 2 584 352 A1**
(43) Veröffentlichungstag der Anmeldung: **24.04.2013**
(21) Anmeldenummer: 11186188.6
(22) Anmeldetag: 21.10.2011
(51) Int. Cl.: G01N 29/04, G01N 29/22, G01N 29/24, G01N 29/34, G01N 29/32

(54) **Erkennung von Spätheimkehrerechos bei der Ultraschallprüfung durch ungeordnete Schussreihenfolge**

(71) Anmelder: Siemens Aktiengesellschaft, 80333 München (DE)
(72) Erfinder: Clossen-von Lanken Schulz, Michael, 47661 Issum (DE); Obermayr, Stefan, 45475 Mülheim (DE)

(57) **Zusammenfassung**

Es wird ein Verfahren zur Erkennung von Spätheimkehrerechos bei der Durchführung einer Mehrzahl von Ultraschall-Winkelscans an einem Untersuchungsobjekt (3) zur Verfügung gestellt, in dem nacheinander für jeden Ultraschall-Winkelscan mittels eines Prüfkopfes (1) eine Mehrzahl von Ultraschallpulsen unter verschiedenen Einschallwinkeln in das Untersuchungsobjekt (3) zum Generieren von Pulsechos eingebracht und die Pulsechos detektiert werden. Dabei werden erfindungsgemäß während eines ersten Ultraschall-Winkelscans der Mehrzahl von Ultraschall-Winkelscans die Ultraschallpulse in einer ersten Reihenfolge der verschiedenen Einschallwinkel und während eines zweiten Ultraschall-Winkelscans der Mehrzahl von Ultraschall-Winkelscans die Ultraschallpulse in einer von der ersten Reihenfolge verschiedenen zweiten Reihenfolge in das Untersuchungsobjekt eingebracht.

## Beschreibung

Die vorliegende Erfindung betrifft ein Verfahren zur Erkennung von Spätheimkehrerechos bei der Durchführung einer Mehrzahl von Ultraschall-Winkelscans an einem Untersuchungsobjekt, in welchem für jeden Ultraschall-Winkelscan nacheinander mittels eines Prüfkopfes unter verschiedenen Einschallwinkeln Ultraschallpulse in das Untersuchungsobjekt eingebracht werden.

Die zerstörungsfreie Prüfung von Werkstücken spielt eine wichtige Rolle bei der Qualitätssicherung und Wartung von aufwändig herzustellenden Produkten. Beispielsweise sind Turbinenschaufeln für Gasturbinen aus hochtemperaturfesten Superlegierungen hergestellt und weisen nicht selten ein gerichtet erstarrtes Kristallgefüge oder gar ein einkristallines Kristallgefüge auf, um die thermische Belastbarkeit weiter zu erhöhen. Der Herstellungsprozess für derartige Turbineschaufeln ist anspruchsvoll und aufwändig. Das Zerstören einer Turbineschaufel im Rahmen der Qualitätskontrolle ist daher nicht wünschenswert. Weiterhin ist es wünschenswert, jede hergestellte Turbinenschaufel auf ihre Qualität hin zu überprüfen, was eine zerstörungsfreie Prüfung erfordert. Aber auch im Rahmen der Wiederaufarbeitung von verschlissenen Turbinenschaufeln (refurbishment) kommen häufig zerstörungsfreie Prüfungsverfahren zum Einsatz, um die innere Integrität des Gefüges der Turbinenschaufeln überprüfen zu können, bevor darüber entschieden wird, ob ein Wiederaufarbeiten der Turbinenschaufel möglich ist oder nicht.

Als zerstörungsfreies Prüfungsverfahren für ein Werkstück kommt häufig die Ultraschallprüfung zur Anwendung. Bei dieser wird ein Ultraschallsignal in das Material des Untersuchungsobjektes eingeschallt und anhand der Abschwächung durch das Untersuchungsobjekt hindurch tretender Signale oder anhand der Intensität im Innern des Untersuchungsobjektes reflektierter Signale eine Aussage über das Gefüge im Inneren abgeleitet. Bei einem sogenannten Winkelscan (sectorial scan) wird Ultraschall in zeitlich kurzen Abständen, die durch die sogenannte Puls-Folge-Frequenz bestimmt sind (PRF: puls recurrence frequency) mit unterschiedlichen Einschallwinkeln in das Untersuchungsobjekt eingebracht. Defekte im Inneren des Untersuchungsobjektes, beispielsweise Risse, Kavitäten, etc. erzeugen Echos der Ultraschallpulse, aus denen auf die Lage und die Größe des Defekts zurück geschlossen werden kann. Ein Verfahren und eine Vorrichtung zum Erzeugen eines Ultraschallbildes ist beispielsweise in EP 2 120 045 A1 beschrieben. In dem darin beschriebenen Verfahren erfolgt das Aufnehmen eines Ultraschallbildes anhand von Winkelscans, die an verschiedenen Orten des Untersuchungsobjektes durchgeführt werden. Jeder Winkelscan wird dabei in einem Winkelbereich von -40° bis + 40° in 21 Schritten von je 4° durchgeführt. Aus den einzelnen Winkelscans wird dann ein Bild des Inneren des Untersuchungsobjektes erstellt.

Bei derartigen, auf der Reflektion von Ultraschallpulsen beruhenden Verfahren entstehen bei vielen Prüfobjekten jedoch Wiederholungsechos, die wegen der geringen Abschwächung des Ultraschallpulses beim Durchlaufen des Untersuchungsobjektes nach mehrmaliger Reflektion den Prüfkopf erreichen. Dabei kann es vorkommen, dass diese Pulsechos zeitlich den Prüfkopf erst erreichen, nachdem bereits weitere Ultraschallpulse ausgelöst wurden. Die Laufzeit der Wiederholungsechos kann dabei so hoch sein, dass das Wiederholungsecho den Prüfkopf erst während eines nachfolgenden Ultraschall-Winkelscans erreicht. Die Wiederholungsechos können dabei fälschlicherweise als Echo des zuletzt eingeschallten Pulses registriert werden, wodurch die Ergebnisse des Prüfungsverfahrens verfälscht werden.

Das beschriebene Phänomen kann vermieden werden, indem die Puls-Folge-Frequenz auf einen niedrigen Wert eingestellt wird, so dass Wiederholungsechos vor dem Aussenden des folgenden Ultraschallpulses beim Messkopf eingehen. In der Praxis führt dies jedoch zu inakzeptabel niedrigen Messraten und daher zu inakzeptablen Messdauern.

Aufgabe der vorliegenden Erfindung ist es daher, ein vorteilhaftes Verfahren zum Durchführen von Ultraschall-Winkelscans an einem Untersuchungsobjekt zur Verfügung zu stellen, in welchem die Gefahr von Verwechslungen von Wiederholungsechos mit Pulsechos vermieden wird oder zumindest verringert ist.

Diese Aufgabe wird durch ein Verfahren zur Erkennung von Spätheimkehrerechos bei der Durchführung von Ultraschall-Winkelscans nach Anspruch 1 und durch eine Vorrichtung nach Anspruch 10 gelöst. Die abhängigen Ansprüche enthalten die vorteilhaften Ausgestaltungen der Erfindungen.

In dem erfindungsgemäßen Verfahren zur Erkennung von Spätheimkehrerechos bei der Durchführung einer Mehrzahl von Ultraschall-Winkelscans an einem Untersuchungsobjekt werden nacheinander für jeden Ultraschall-Winkelscan mittels eines Prüfkopfes eine Mehrzahl von Ultraschallpulsen unter verschiedenen Einschallwinkeln in das Untersuchungsobjekt zum Generieren von Pulsechos eingebracht und die Pulsechos detektiert. Dabei werden erfindungsgemäß während eines ersten Ultraschall-Winkelscans der Mehrzahl von Ultraschall-Winkelscans die Ultraschallpulse in einer ersten Reihenfolge der verschiedenen Einschallwinkel und während eines zweiten Ultraschall-Winkelscans der Mehrzahl von Ultraschall-Winkelscans die Ultraschallpulse in einer von der ersten Reihenfolge verschiedenen zweiten Reihenfolge in das Untersuchungsobjekt eingebracht.

Die Erfindung ermöglicht, durch den Vergleich der beiden Ultraschall-Winkelscans von Spätheimkehrerechos hervorgerufene Fehler zu erkennen, weil aufgrund der von einem Ultraschall-Winkelscan zum nächsten geänderten Reihenfolge der Einschallwinkel ein in einem bestimmten Einschallwinkel erzeugtes Spätheimkehrerecho jeweils in einem anderen folgenden Einschallwinkel detektiert wird. Dadurch ändert ein aufgrund des Spätheimkehrerechos fälschlich detektierter Ultraschallreflektor (beispielsweise eine vermeintliche Kavität im Untersuchungsobjekt) von einem Ultraschall-Winkelscan zum anderen seine Position innerhalb des Ultraschall-Winkelscans.

Die erste und die zweite Reihenfolge werden vorzugsweise durch einen Zufallsgenerator oder einen Pseudozufallsgenerator bestimmt. Generell können aber auch vorher festgelegte Reihenfolgen von Einschallwinkeln verwendet werden. Insbesondere ist es auch bei allen Ausführungsformen der Erfindung möglich, für mehr als zwei aufeinanderfolgende Ultraschall-Winkelscans jeweils eigene Reihenfolgen von Einschallwinkeln, die sich von den Reihenfolgen der jeweils anderen Ultraschall-Winkelscans unterscheiden, vorzugeben.

Besonders gute Ergebnisse werden erzielt, wenn für jeden beliebigen Einschallwinkel der verschiedenen Einschallwinkel jeder zu demjenigen unter dem beliebigen Einschallwinkel der verschiedenen Einschallwinkel eingebrachten Ultraschallpuls direkt benachbarte Ultraschallpuls während des ersten Ultraschall-Winkelscans unter einem anderen Einschallwinkel in das Untersuchungsobjekt eingebracht wird als ein entsprechender direkt benachbarter Ultraschallpuls während des zweiten Ultraschall-Winkelscans. In diesem Fall wird der Vorteil der Erfindung für jeden einzelnen Einschallwinkel der beiden Ultraschall-Winkelscans erreicht, da kein Einschallwinkel in beiden Ultraschall-Winkelscans denselben Vorgänger- und/oder Nachfolgeeinschallwinkel aufweist.

Ein Beispiel, wie derartige Reihenfolgen erzeugt werden können, bietet eine Ausführungsform der Erfindung, bei der die erste Reihenfolge eine oder mehrere Gruppen von Einschallwinkeln umfasst, wobei jeder Einschallwinkel genau einer Gruppe zugeordnet ist. Die zweite Reihenfolge umfasst dabei für jede der Gruppen eine Spiegelgruppe, der die gleichen Einschallwinkel wie diejenigen der jeweiligen Gruppe der ersten Reihenfolge zugeordnet sind und bei der die zugeordneten Einschallwinkel gegenüber der jeweiligen Gruppe der ersten Reihenfolge in spiegelbildlicher Anordnung eingebracht werden. Eine Gruppe kann dabei entweder nur benachbarte Einschallwinkel oder aber auch solche Einschallwinkel enthalten, die durch anderen Gruppen zugeordnete Einschallwinkel voneinander getrennt sind.

Bei einer einfachen Ausgestaltung dieser Verfahrensvariante umfasst jede Gruppe von Einschallwinkeln genau ein Paar von Einschallwinkeln. Dies bedeutet, dass von einem Ultraschall-Winkelscan zum nächsten jeweils zwei in der ersten Reihenfolge benachbarte Einschallwinkel miteinander vertauscht werden.

Es ist auch bei diesen vorteilhaften Ausführungsformen der Erfindung auch möglich, zusätzlich die Reihenfolge der Gruppen von Einschallwinkeln zu verändern. Das heißt, die erste Reihenfolge und die zweite Reihenfolge können eine Mehrzahl von Gruppen beziehungsweise Spiegelgruppen umfassen und die Gruppen der ersten Reihenfolge einander in einer ersten Abfolge und die Spiegelgruppen der zweiten Reihenfolge einander in einer von der ersten Abfolge verschiedenen zweiten Abfolge folgen. Dies kann die Robustheit gegen sehr späte Pulsechos bei großen Untersuchungsobjekten verbessern.

Vorteilhafterweise werden für jeden Ultraschallpuls jedes Ultraschall-Winkelscans die Zeitdauer vom Einschallen des Ultraschallpulses bis zum Empfang des oder der detektierten Pulsechos und die Intensität des oder der detektierten Pulsechos an eine Auswerteroutine weitergeleitet werden, woraus die Auswerteroutine eine Bilddarstellung des Inneren des Untersuchungsobjekts generiert.

Durch eine einfache Mittelwertbildung einer Mehrzahl solcher Bilddarstellungen können durch Wiederholungsechos verursachte Bildelemente eliminiert werden, da aufgrund der jeweils veränderten Reihenfolge von Einschallwinkeln die Wiederholungsechos jeweils unter einem anderen Einschallwinkel erscheinen werden und so von Bild zu Bild wandern, während statische Bildelemente durch die Mittelwertbildung unbeeinträchtigt bleiben.

Es sind aber auch andere Ansätze denkbar. So kann beispielsweise eine erste Bilddarstellung des ersten Ultraschall-Winkelscans mit einer zweiten Bilddarstellung des zweiten Ultraschall-Winkelscans verglichen und in Abhängigkeit von einem Vergleichsergebnis eine Ergebnisbilddarstellung generiert werden. Die Ergebnisbilddarstellung lässt ein für einen bestimmten Einschallwinkel mit einer bestimmten Zeitdauer vom Einschallen des Ultraschallpulses bis zum Empfang des oder der detektierten Pulsechos detektiertes Pulsecho des ersten oder zweiten Ultraschall-Winkelscans unberücksichtigt, wenn in dem jeweils anderen Ultraschall-Winkelscan des ersten oder zweiten Ultraschall-Winkelscans für den bestimmten Einschallwinkel und die bestimmte Zeitdauer kein Pulsecho detektiert wurde. Diese Ausführungsform des erfindungsgemäßen Verfahrens eliminiert automatisch die aufgrund von Spätheimkehrerechos aufretenden Bildfehler. Es können allerdings auch andere Verfahren für diesen Zweck eingesetzt werden, beispielsweise Algorithmen, die aus der Unterdrückung von Bildrauschen bekannt sind.

Bevorzugt wird dabei für den jeweils anderen Ultraschall-Winkelscan kein Pulsecho detektiert, wenn die Intensität des für den bestimmten Einschallwinkel und die bestimmte Zeitdauer detektierten Pulsechos um mehr als einen vorbestimmten Wert oder Faktor größer ist als eine Intensität eines Pulsechos in dem jeweils anderen Ultraschall-Winkelscan. Diese speziellere Ausführungsform besitzt den Vorteil, dass beim Vergleich der beiden Ultraschall-Winkelscans beziehungsweise der beiden Bilddarstellungen durch Messungenauigkeiten verursachte Abweichungen die Erstellung der Ergebnisbilddarstellung weniger stark verfälschen.

Ein zweiter Aspekt der Erfindung führt eine Vorrichtung zur Erkennung von Spätheimkehrerechos bei der Durchführung einer Mehrzahl von Ultraschall-Winkelscans an einem Untersuchungsobjekt ein, die einen zum Einbringen von Ultraschallpulsen unter einem vorgebbaren Einschallwinkel ausgebildeten Prüfkopf und eine mit dem Prüfkopf verbundene Steuereinheit zum Vorgeben des Einschallwinkels umfasst. Die Steuereinheit ist dabei dazu ausgebildet, das erfindungsgemäße Verfahren auszuführen.

Zwar wurde die vorliegende Erfindung im Hinblick auf die Erkennung von Wiederholungsechos ohne Verringerung der Puls-Folge-Frequenz beschrieben, jedoch besteht auch die Möglichkeit, die Puls-Folge-Frequenz zu erhöhen, ohne das Risiko von unerkannten Wiederholungsechos gegenüber den im Stand der Technik verwendeten Verfahren zu erhöhen. Dadurch kann die Messrate erhöht und somit die Dauer einer Messung verringert werden.

Weitere Merkmale, Eigenschaften und Vorteile der vorliegenden Erfindung ergeben sich aus der nachfolgenden Beschreibung eines Ausführungsbeispiels unter Bezugnahme auf die beiliegende Figur.

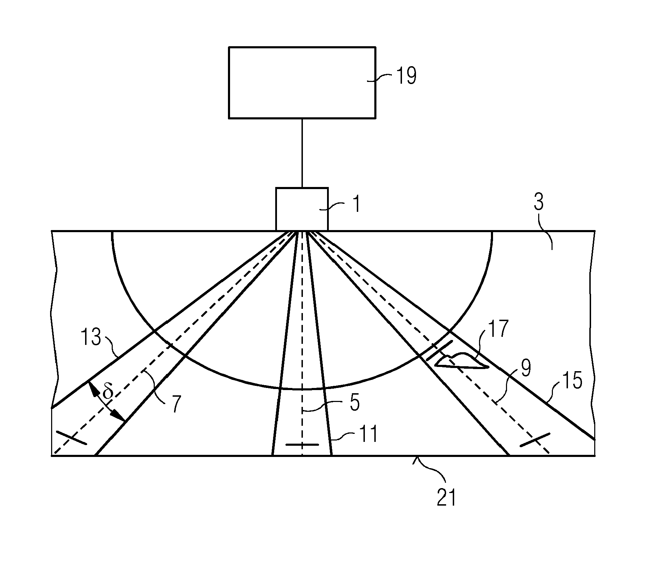

Figur 1 zeigt das Einschallen einer Pulsfolge in ein Untersuchungsobjekt im Rahmen eines Ultraschall-Winkelscans in einer schematischen Darstellung.

Figur 1 zeigt in einer schematisierten Darstellung das Einschallen von Ultraschallpulsen mittels eines Prüfkopfes 1 in ein Untersuchungsobjekt 3, dass beispielsweise ein Turbinenbauteil wie etwa eine Leit- oder Laufschaufel einer Gasturbine sein kann.

Ausgehend vom Ultraschallprüfkopf 1 werden zum Durchführen eines Ultraschall-Winkelscans nacheinander Ultraschallpulse unter einer Vielzahl von Einschallwinkeln in das Untersuchungsobjekt 3 eingeschallt. In der Figur sind dabei drei unter verschiedenen Einschallwinkeln eingeschallte Ultraschallpulse anhand ihrer Schallkegel 11, 13, 15 exemplarisch dargestellt. Die Einschallrichtungen der Pulse sind in der Figur als Mittelachsen 5, 7, 9 der die Ultraschallpulse repräsentierenden Schallkegel 11, 13, 15 dargestellt. Es sei an dieser Stelle darauf hingewiesen, dass die tatsächliche Zahl an Einschallpulsen, die unter verschiedenen Einschallwinkeln in das Untersuchungsobjekt eingeschallt werden in der Regel deutlich größer ist als drei.

Ultraschallpulse breiten sich in einem kontinuierlichen Medium entlang einer Ausbreitungsrichtung aus und weisen ein Intensitätsmaximum auf. Die Intensität des Ultraschallpulses nimmt senkrecht zur Ausbreitungsrichtung beiderseits des Intensitätsmaximums schnell ab. Üblicherweise wird eine Begrenzung des Ultraschallpulses an denjenigen Abständen vom jeweiligen Intensitätsmaximum definiert, bei denen die Intensität gegenüber dem jeweiligen Intensitätsmaximum um einen bestimmten Betrag beziehungsweise Faktor abgenommen hat. Die Begrenzung des Ultraschallpulses beschreibt dabei einen Winkel, der als Öffnungswinkel δ bezeichnet wird, der dem Divergenzwinkel des Prüfkopfes 1 entspricht.

Die in das Untersuchungsobjekt 3 eingeschallten Ultraschallpulse erzeugen Echos, aus denen ein Bild der inneren Struktur des Untersuchungsobjektes 3 gewonnen werden kann. Hierzu werden Pulsechos der eingeschallten Ultraschallpulse detektiert und im Hinblick auf ihre Intensität und die Richtung, aus der das Echo den Prüfkopf 1 erreicht, analysiert.

Aus dem Analyseergebnis erstellt eine Auswerteeinheit 19, die beispielsweise als Digitaler Signalprozessor (DSP) oder als Application Specific Integrated Circuit (ASIC) realisiert sein kann, dann ein Bild der inneren Struktur des Untersuchungsobjektes 3.

Beim Erstellen des Bildes vom Inneren des Untersuchungsobjektes 3 wird in Richtung jedes Einschallwinkels ein sogenannter A-Scan (Amplitudenscan) durchgeführt, in dem die Amplitudenhöhe als Funktion der Laufzeit vom Einschallen des Pulses bis zum Empfang des Echos gemessen wird. Anschließend wird das Bild aus den unter den verschiedenen Einschallwinkeln des Winkelscans gewonnenen A-Scans zusammengesetzt. Liegen alle Einschallwinkel innerhalb einer Ebene, so entspricht das zusammengesetzte Bild einem sogenannten B-Scan, dem Bild eines zweidimensionalen Schnittes durch das Untersuchungsobjekt 3. Man spricht hierbei auch von einem Ultraschall-Winkelscan.

Aus mehreren parallel verlaufenden B-Scans kann dann bspw. ein dreidimensionales Bild des Untersuchungsobjektes 3 gewonnen werden.

Zum eigentlichen Durchführen des Winkelscans werden Ultraschallpulse in zeitlich kurzen Abständen, die durch die Puls-Folge-Frequenz bestimmt sind, mit unterschiedlichen Einschallwinkeln in das Untersuchungsobjekt 3 eingebracht. Dabei entstehen Pulsechos an inneren Strukturen des Untersuchungsobjektes, die als Reflektor 17 wirken. Dies können beispielsweise Risse oder Kavitäten innerhalb der Gefügestruktur des Untersuchungsobjektes 3 sein.

Aus der Laufzeit bis zum Empfang des Impulsechos kann die Entfernung des Reflektors 17 zum Prüfkopf 1 bestimmt werden. Die Ausrichtung des Prüfkopfes 1 in dem Moment, als der für das empfangene Impulsecho ursächliche Ultraschallpuls ausgesendet wurde, liefert dann die verbleibenden Raumkoordinaten, so dass der Ort des Reflektors 17 abgeleitet werden kann. Dies gelingt jedoch nur dann korrekt, wenn das Impulsecho nicht von einem während einer anderen Ausrichtung des Prüfkopfes 1 ausgesendeten früheren Ultraschallpuls erzeugt wurde, beispielsweise als Spätheimkehrerecho an einer entfernten Wandung des Untersuchungsobjektes 3. In einem solchen Fehlerfall würde ein deutlich näher am Prüfkopf 1 und in einer anderen Richtung als die des tatsächlichen Ursprungsortes des Impulsechos gelegener Reflektor angenommen, der jedoch gar nicht existiert.

Bei vielen Untersuchungsobjekten entstehen nämlich nicht nur Echos an inneren Strukturen des Untersuchungsobjektes 3, sondern beispielsweise auch an der Wand 21 des Untersuchungsobjektes 3, die das Untersuchungsobjekt durchwandern und schließlich den Prüfkopf 1 erreichen können. Diese Echos liefern jedoch keine relevante Information über das innere Gefüge des Untersuchungsobjektes 3. Allerdings können diese Folgeechos den Winkelscan stören, wenn sie zeitlich den Prüfkopf 1 erst dann erreichen, wenn weitere Ultraschallpulse (nachfolgend Folgepulse genannt) bereits in das Untersuchungsobjekt 3 eingeschallt sind oder sogar ein nachfolgender Ultraschall-Winkelscan begonnen wurde. Wenn das Wiederholungsecho dann aus einer Richtung eintrifft, die ungefähr der Einschallrichtung eines Folgepulses entspricht, kann das Wiederholungsecho fälschlicherweise als Echo des Folgepulses missinterpretiert werden, was zu einem Fehler im A-Scan des Folgepulses - und damit zu einem Fehler im Bild des Untersuchungsobjektes 3 - führen kann.

Im Rahmen der vorliegenden Erfindung erfolgt das Einschallen aufeinander folgender Ultraschallpulse in das Untersuchungsobjekt 3 für aufeinanderfolgende Ultraschall-Winkelscans daher in unterschiedlichen Reihenfolgen von Einschallwinkeln, so dass ein in einem bestimmten Einschallwinkel auftretendes spätes Pulsecho beim Prüfkopf eintrifft, wenn der Prüfkopf jeweils einen anderen folgenden Einschallwinkel einnimmt.

Selbstredend kann die Erfindung auch dergestalt ausgeführt werden, dass beispielsweise drei oder mehr aufeinanderfolgende Ultraschall-Winkelscans jeweils eine eindeutig zugeordnete Reihenfolge von Einschallwinkeln aufweisen, die sich von den Reihenfolgen der anderen Ultraschall-Winkelscans unterscheiden.

Ein Beispiel für eine erste Ausführungsform der Erfindung mit zwei verschiedenen Reihenfolgen von Einschallwinkeln wird durch die nachfolgende Tabelle genauer erläutert. In dieser Tabelle zeigt die erste Spalte die chronologische Reihenfolge der in das Untersuchungsobjekt eingeschallten Pulse, die zweite Spalte die während des ersten Ultraschall-Winkelscans verwendeten Einschallwinkel und die dritte Spalte die für den zweiten Ultraschall-Winkelscan verwendeten Einschallwinkel.

| Puls Nr. | 1. Winkelscan | 2. Winkelscan |
|---|---|---|
| 1 | -28° | -26° |
| 2 | -26° | -28° |
| 3 | -24° | -22° |
| 4 | -22° | -24° |
| 5 | -20° | -18° |
| 6 | -18° | -20° |
| 7 | -16° | -14° |
| 8 | -14° | -16° |
| 9 | -12° | -10° |
| 10 | -10° | -12° |
| 11 | -8° | -6° |
| 12 | -6° | -8° |
| 13 | -4° | -2° |
| 14 | -2° | -4° |
| 15 | 0° | +2° |
| 16 | +2° | 0° |
| 17 | +4° | +6° |
| 18 | +6° | +4° |
| 19 | +8° | +10° |
| 20 | +10° | +8° |
| 21 | +12° | +14° |
| 22 | +14° | +12° |
| 23 | +16° | +18° |
| 24 | +18° | +16° |
| 25 | +20° | +22° |
| 26 | +22° | +20° |
| 27 | +24° | +26° |
| 28 | +26° | +24° |
| 29 | +28° | +28° |

In dem in der Tabelle dargestellten Beispiel wird ein B-Scan aus 29 A-Scans gewonnen, wobei die Gesamtheit aller A-Scans einen Winkelbereich von -28° bis +28° in 2°-Schritten abdeckt. Die Einschallwinkel werden während des ersten Ultraschall-Winkelscans in monotoner Folge, im vorliegenden Beispiel in monoton steigender Folge von -28° bis +28° durchgescannt, prinzipiell ist aber jede beliebige Reihenfolge von Einschallwinkeln im Rahmen der Erfindung einsetzbar. Während des nachfolgenden zweiten Ultraschall-Winkelscans wurden die Einschallwinkel der ersten Reihenfolge in Gruppen zu je zwei direkt aufeinanderfolgende Einschallwinkel aufgeteilt und jede Gruppe gespiegelt. Dadurch hat keiner der Einschallwinkel des ersten Ultraschall-Winkelscans im zweiten Ultraschall-Winkelscan die gleichen entsprechenden Nachbar-Einschallwinkel. Zwar hat beispielsweise der Einschallwinkel von +18° im ersten Ultraschall-Winkelscan die Nachbar-Einschallwinkel +16° und +20° und im zweiten Ultraschall-Winkelscan die Nachbar-Einschallwinkel +12° und +16°, allerdings wird der übereinstimmende Einschallwinkeln von +16° bei dem ersten Ultraschall-Winkelscan vor dem Einschallwinkel von +18° und bei dem zweiten Ultraschall-Winkelscan nach dem Einschallwinkel von +18° eingeschallt, so dass die entsprechenden Nachbar-Einschallwinkel (+16° bzw. +12° bei den vorhergehend benachbarten Ultraschallpulsen und +20° bzw. +16° bei den nachfolgend benachbarten Ultraschallpulsen) sich doch voneinander unterscheiden. Noch bessere Ergebnisse können erreicht werden, wenn eine stärkere Durchmischung der Einschallwinkel vorgenommen wird.

Die Erfindung ermöglicht einen besonders schnellen Durchlauf der Einschallwinkel, ohne eine Beeinträchtigung durch Spätheimkehrerechos befürchten zu müssen.

Die vorliegende Erfindung wurde unter Bezugnahme auf die Figur 1 anhand konkreter Ausführungsbeispiele beschrieben. Abwandlungen von diesen Ausführungsbeispielen sind jedoch möglich.

## Patentansprüche

1. Ein Verfahren zur Erkennung von Spätheimkehrerechos bei der Durchführung einer Mehrzahl von Ultraschall-Winkelscans an einem Untersuchungsobjekt (3),
wobei für jeden Ultraschall-Winkelscan nacheinander mittels eines Prüfkopfes (1) eine Mehrzahl von Ultraschallpulsen unter verschiedenen Einschallwinkeln in das Untersuchungsobjekt (3) zum Generieren von Pulsechos eingebracht und die Pulsechos detektiert werden,
**dadurch gekennzeichnet, dass**
während eines ersten Ultraschall-Winkelscans der Mehrzahl von Ultraschall-Winkelscans die Ultraschallpulse in einer ersten Reihenfolge der verschiedenen Einschallwinkel und während eines zweiten Ultraschall-Winkelscans der Mehrzahl von Ultraschall-Winkelscans die Ultraschallpulse in einer von der ersten Reihenfolge verschiedenen zweiten Reihenfolge in das Untersuchungsobjekt eingebracht werden.

2. Das Verfahren nach dem vorhergehenden Anspruch,
bei dem die erste und die zweite Reihenfolge durch einen Zufallsgenerator oder einen Pseudozufallsgenerator bestimmt werden.

3. Das Verfahren nach einem der vorhergehenden Ansprüche, bei dem für jeden beliebigen Einschallwinkel der verschiedenen Einschallwinkel jeder zu demjenigen unter dem beliebigen Einschallwinkel der verschiedenen Einschallwinkel eingebrachten Ultraschallpuls direkt benachbarte Ultraschallpuls während des ersten Ultraschall-Winkelscans unter einem anderen Einschallwinkel in das Untersuchungsobjekt eingebracht wird als ein entsprechender direkt benachbarter Ultraschallpuls während des zweiten Ultraschall-Winkelscans.

4. Das Verfahren nach dem vorhergehenden Anspruch,
bei dem die erste Reihenfolge eine oder mehrere Gruppen von Einschallwinkeln umfasst,
wobei jeder Einschallwinkel genau einer Gruppe zugeordnet ist, und bei dem die zweite Reihenfolge für jede der Gruppen eine Spiegelgruppe umfasst, der die gleichen Einschallwinkel wie diejenigen der jeweiligen Gruppe der ersten Reihenfolge zugeordnet sind und bei der die zugeordneten Einschallwinkel gegenüber der jeweiligen Gruppe der ersten Reihenfolge in spiegelbildlicher Anordnung eingebracht werden.

5. Das Verfahren nach dem vorhergehenden Anspruch,
bei dem jede Gruppe von Einschallwinkeln genau ein Paar von Einschallwinkeln umfasst.

6. Das Verfahren nach einem der beiden vorhergehenden Ansprüche,
bei dem die erste Reihenfolge und die zweite Reihenfolge eine Mehrzahl von Gruppen beziehungsweise Spiegelgruppen umfassen und die Gruppen der ersten Reihenfolge einander in einer ersten Abfolge und die Spiegelgruppen der zweiten Reihenfolge einander in einer von der ersten Abfolge verschiedenen zweiten Abfolge folgen.

7. Das Verfahren nach einem der vorhergehenden Ansprüche, bei dem für jeden Ultraschallpuls jedes Ultraschall-Winkelscans die Zeitdauer vom Einschallen des Ultraschallpulses bis zum Empfang des oder der detektierten Pulsechos und die Intensität des oder der detektierten Pulsechos an eine Auswerteroutine weitergeleitet werden und die Auswerteroutine daraus eine Bilddarstellung des Inneren des Untersuchungsobjekts (3) generiert.

8. Das Verfahren nach dem vorhergehenden Anspruch,
bei dem eine erste Bilddarstellung des ersten Ultraschall-Winkelscans mit einer zweiten Bilddarstellung des zweiten Ultraschall-Winkelscans verglichen wird und in Abhängigkeit von einem Vergleichsergebnis eine Ergebnisbilddarstellung generiert wird,
wobei die Ergebnisbilddarstellung ein für einen bestimmten Einschallwinkel mit einer bestimmten Zeitdauer vom Einschallen des Ultraschallpulses bis zum Empfang des oder der detektierten Pulsechos detektiertes Pulsecho des ersten oder zweiten Ultraschall-Winkelscans unberücksichtigt lässt, wenn in dem jeweils anderen Ultraschall-Winkelscan des ersten oder zweiten Ultraschall-Winkelscans für den bestimmten Einschallwinkel und die bestimmte Zeitdauer kein Pulsecho detektiert wurde.

9. Das Verfahren nach dem vorhergehenden Anspruch,
bei dem für den jeweils anderen Ultraschall-Winkelscan kein Pulsecho detektiert wird, wenn die Intensität des für den bestimmten Einschallwinkel und die bestimmte Zeitdauer detektierten Pulsechos um mehr als einen vorbestimmten Wert oder Faktor größer ist als eine Intensität eines Pulsechos in dem jeweils anderen Ultraschall-Winkelscan.

10. Eine Vorrichtung zur Erkennung von Spätheimkehrerechos bei der Durchführung einer Mehrzahl von Ultraschall-Winkelscans an einem Untersuchungsobjekt (3),
die einen zum Einbringen von Ultraschallpulsen unter einem vorgebbaren Einschallwinkel ausgebildeten Prüfkopf (1) und eine mit dem Prüfkopf (1) verbundene Steuereinheit (19) zum Vorgeben des Einschallwinkels aufweist,
**dadurch gekennzeichnet, dass**
die Steuereinheit (19) ausgebildet ist, das Verfahren von einem der vorhergehenden Ansprüche auszuführen.
